# EUROPÄISCHE PATENTSCHRIFT

(11) **EP 4 162 796 B1**
(45) Veröffentlichungstag und Bekanntmachung des Hinweises auf die Patenterteilung: **21.02.2024**
(21) Anmeldenummer: 22198887.6
(22) Anmeldetag: 29.09.2022
(51) Int. Cl.: A01K 27/00

(54) **HUNDEGESCHIRR**
DOG HARNESS
HARNAIS POUR CHIEN

(30) Priorität: 05.10.2021 DE 102021125814
(43) Veröffentlichungstag der Anmeldung: 12.04.2023
(73) Patentinhaber: Heuser, Andrea, 57567 Daaden (DE)
(72) Erfinder: Heuser, Andrea, 57567 Daaden (DE)
(74) Vertreter: Wagner Albiger & Partner Patentanwälte mbB

(56) Entgegenhaltungen:
- EP-A2- 2 965 620
- US-A1- 2006 236 954
- US-A1- 2012 024 239
- US-B1- 7 284 504

## Beschreibung

Die Erfindung betrifft einen Führungsabschnitt umfassend einen streifenförmigen Führungssteg mit einem vorderen und einem rückwärtigen Ende.

Üblicherweise werden Hunde in der Öffentlichkeit an Leinen geführt, um die Kontrolle über das Tier wahren zu können. Meist sind die Leinen an Halsbändern oder Geschirren befestigt. Geschirre werden sowohl für Gebrauchshunde, als auch im Freizeitbereich beim Spazierengehen, Joggen, Radfahren oder im Hundesport verwendet, wie beispielsweise aus der US 2010/0242861 A1, der US 2021/0235669 A1 oder der DE 20 2011 050 156 U1 bekannt.

Die US 2008/0047501 A1 zeigt ein Geschirr, das sich im Schulter- und Brustbereich des Tieres zusammenzieht, wenn Zug auf eine am Geschirr befestigte Leine ausgeübt wird. Dadurch soll vermieden werden, dass das Tier aus dem Geschirr entkommen kann. Solche Geschirre sind aber in der Art nachteilig, als dass sie durch das Zusammenziehen Panikreaktionen auslösen und dem Tier im schlimmsten Fall Schmerzen bereiten können.

US 2006/236954 A1 offenbart eine Anordnung umfassend ein Halsband, ein Bauchgurt und ein Führungsabschnitt für eine Hundeleine.

Nachteilig bei der Verwendung von Leinen zum Führen von Hunden ar Geschirren oder Halsbändern ist, dass der Hund sich mit den Beinen in der Leine verfangen kann. Die Leine kann sich dann beispielsweise um ein oder mehrere Beine wickeln oder unter dem Bauch des Hundes zwischen den Beinen verlaufen. Dadurch ist die Funktion des Geschirrs oder Halsbandes und der Leine beeinträchtigt. Das Befreien des Hundes aus einer verhedderten Leine ist zeitaufwändig und wenig komfortabel. Zudem kann eine unbeabsichtigt am Bauch, an Beinen oder im Genitalbereich verlaufende Leine dem Hund beispielsweise durch Reibung oder bei ruckartiger Straffung der Leine Schmerzen bereiten oder auch eine Verletzungsgefahr darstellen. Ängstliche Hunde können in einer solchen Situation schnell in Panik geraten, was eine Befreiung des Tieres aus der Leine schwierig gestaltet.

Daher ist es Aufgabe der vorliegenden Erfindung, einen Führungsabschnitt bereitzustellen, mittels dessen das Führen eines Hundes an einer Leine möglich ist und gleichzeitig ein Verheddern des Hundes in der Leine verhindert.

Zur Lösung der gestellten Aufgabe wird erfindungsgemäß ein Führungsabschnitt gemäß den Merkmalen des Anspruchs 1 vorgeschlagen.

Vorteilhafte Ausgestaltungen und Weiterbildungen der Erfindung sind Gegenstand der abhängigen Ansprüche.

Erfindungsgemäß ist ein Führungsabschnitt vorgesehen, der einen streifenförmigen Führungssteg mit einem vorderen und einem rückwärtigen Ende umfasst. Der Führungsabschnitt liegt auf einem Hunderücken auf und ist dazu geeignet und vorgesehen, verschiedenste Formen und Ausgestaltungen von Geschirren oder Halsbändern zu ergänzen, beispielsweise gängige Brustgeschirre oder auch Panikgeschirre. Der Führungssteg erstreckt sich bevorzugt entlang einer Achse parallel zur Längsachse des Hunderückens. Es sind aber auch andere Ausgestaltungen denkbar, wie beispielsweise eine schmetterlingsförmige Anordnung, die sich der Anatomie des Hundes anpasst. Der Führungssteg kann gepolstert ausgestaltet sein, um den Tragekomfort für den Hund zu erhöhen. Der Führungssteg umfasst am vorderen Ende mindestens ein Befestigungselement zur lösbaren Fixierung an dem Geschirr oder Halsband. Ein solches Befestigungselement ist vorteilhaft, um den Führungsabschnitt verrutschsicher am verwendeten Halsband oder Geschirr zu befestigen und ihn nach der Benutzung zu lösen. Ein Führungsabschnitt kann auf diese Weise für verschiedenste Geschirre oder Halsbänder verwendet werden. In einer bevorzugten Ausgestaltung weist der Führungsabschnitt zwei Befestigungselemente auf, die bei Benutzung am Hund an der dem Hundekopf zugewandten vorderen Seite des Führungsstegs angeordnet sind, sodass das vordere Ende in Richtung des Hundekopfs ausgerichtet ist. Diese Anordnung erleichtert und verstärkt die Fixierung und erhöht die Sicherheit. Geschirre sind meist als Brustgeschirre ausgestaltet, sodass die Befestigungselemente sich durch diese Anordnung in direkter Nähe zu dem Geschirr befinden. Auch für die Ergänzung eines Halsbands ist diese Anordnung vorteilhaft.

Am rückwärtigen Ende des Führungsstegs sind Beinschlaufen angeordnet. Bevorzugt sind mindestens zwei Beinschlaufen für die Befestigung an den Hundebeinen vorgesehen und bevorzugt sind die Beinschlaufen so ausgestaltet, dass sie sich für die Befestigung an den Hinterbeinen des Hundes eignen. Jede Beinschlaufe verläuft in Form einer Schleife um ein Hundebein. Die Enden der Schleife sind mit dem Führungssteg verbunden. Diese Ausgestaltung bietet den Vorteil, dass der Führungsabschnitt verrutschsicher am Hundekörper befestigbar ist. In einer bevorzugten Ausgestaltung sind die Beinschlaufen aus einem flexiblen Material gefertigt, beispielsweise aus Kernmantelseil. Dies bietet den Vorteil, dass sich das Material an den Hundekörper anpasst und den Hund in der Bewegung nicht einschränkt.

Es sind mindestens zwei Leinenführungen entlang des Führungsstegs vorgesehen, von denen eine im Bereich des rückwärtigen Endes und die andere in Richtung des vorderen Endes beabstandet am Führungssteg angeordnet ist. Diese dienen zur sicheren Führung der Leine. Bevorzugt ist die Leinenführung in Richtung des vorderen Endes bei Auflage auf dem Rücken des Hundes auf der dem Hundekopf zugewandten Seite oder in der Mitte des Führungsstegs angeordnet. Bevorzugt erstreckt sie sich über eine Breite von 2 bis 6 cm, besonders bevorzugt über eine Breite von 3 bis 5 cm. Die Länge dieser Leinenführung ist variabel, in einem bevorzugten Ausführungsbeispiel erstreckt sie sich über eine Länge von mindestens 2 cm, um eine sichere und ruhige Leinenführung zu gewährleisten. Zu dieser Leinenführung beabstandet ist eine weitere Leinenführung auf dem Führungssteg im Bereich des rückwärtigen Endes angeordnet, bevorzugt kurz vor dem Schwanzansatz des Hundes. Bevorzugt orientiert sich die Breite dieser Leinenführung an der Breite der Leinenführung in Richtung des vorderen Endes des Führungsstegs. Die Leinenführungen sind derart ausgestaltet, dass eine am Geschirr oder am Halsband befestigte Leine durch die Leinenführungen hindurch entlang einer Achse parallel zur Längsachse des Hunderückens führbar ist. Diese Anordnung und die daraus folgende Führung der Leine bietet den Vorteil, dass die Leine auch bei schneller und unwillkürlicher Bewegung des Hundes auf dem Rücken verbleibt und sich nicht zwischen dessen Beinen verheddern oder um den Bauch des Hundes schlingen kann. Bei der Leine kann es sich beispielsweise um eine Schleppleine oder eine Rollleine handeln, aber auch andere Leinen zum Führen von Hunden sind denkbar. Auch bei ruckartiger Straffung der Leine oder unvorhergesehenen Richtungswechseln des Hundes verbleibt die Leine am Hunderücken, wodurch ein Verheddern unterbleibt. Insbesondere bei Angsthunden ist es zudem wichtig, dass dieser sich nicht von seinem Halsband oder aus seinem Geschirr befreien kann. Selbst bei sogenannten Panikgeschirren, die ein solches Befreien vermeiden sollen, kann nicht immer verhindert werden, dass sich ein ängstlicher Hund befreit und flüchtet. Der Führungsabschnitt bietet eine Absicherung, sodass der Hund sich der Leinenführung nicht entziehen kann.

Nach einem Ausführungsbeispiel der Erfindung beträgt der Abstand zwischen den Leinenführungen zwischen 5 und 40 cm, besonders bevorzugt mindestens 10 cm. Der Abstand zwischen den Leinenführungen wird bevorzugt in Abhängigkeit von der Größe des Hundes gewählt und auf diese Weise eine sichere Leinenführung garantiert.

Nach einem weiteren Ausführungsbeispiel der Erfindung ist die Leinenführung im Bereich des rückwärtigen Endes im Wesentlichen als Öse aus Metall oder Kunststoff gebildet. Eine derart ausgebildete Leinenführung im Bereich des rückwärtigen Endes ist vorteilhaft, um die Langzeitstabilität des Führungsabschnitts zu verbessern, da diese durch die Bewegung der Leine in Benutzung stärker beansprucht wird.

Nach einem weiteren Ausführungsbeispiel ist die in Richtung des vorderen Endes beabstandete Leinenführung in Form einer Stoffschlaufe ausgebildet. Eine solche Stoffschlaufe ist beispielsweise geeignet, ein Weichgummilabel aufzunehmen, beispielsweise zur vorteilhaften Platzierung eines Markenlogos. Es ist aber auch denkbar, die in Richtung des vorderen Endes beabstandete Leinenführung im Wesentlichen aus einem elastischen Weichgummi vorzusehen. Diese Ausführungsformen sind für diese Leinenführung vorteilhaft, um ein ruhiges Liegen der durch sie hindurch geführten Leine sicherzustellen, sodass die Leine den Hund nicht negativ beeinträchtigt.

Nach einem weiteren Vorschlag der Erfindung sind die Beinschlaufen und/oder die Befestigungselemente längenverstellbar. Beispielsweise durch die Verwendung von Schiebeschnallen ist die Länge der Beinschlaufen und/oder Befestigungselemente individuell anpassbar, sodass eine optimale Passform bei verschieden ausgestalteten Geschirren oder Halsbändern gegeben ist und zugleich die anatomischen Gegebenheiten des Hundes berücksichtigt sind.

Nach einem weiteren Vorschlag der Erfindung weisen die Beinschlaufen und/oder die Befestigungselemente jeweils ein Verschlusselement zum Öffnen und Wiederverschließen auf. Es ist beispielsweise denkbar, dass die Beinschlaufen und/oder Befestigungselemente je über einen Klettverschluss, Schnallen, Riemen oder Steckschließer zu öffnen und wieder zu verschließen sind, um die lösbare Fixierung zu erleichtern. Auch eine lösbare Fixierung mittels Verknotung ist darüber hinaus denkbar.

Nach einem weiteren Vorschlag der Erfindung weisen die Beinschlaufen eine Polsterung auf. Die Polsterung kann beispielsweise fest verbunden oder auch lösbar an den Beinschlaufen fixiert sein. Zur Polsterung eignen sich beispielsweise Materialien wie Fleece oder Chloropren-Kautschuk. Eine Polsterung ist vorteilhaft, um beispielsweise Scheuerstellen am Hundekörper zu vermeiden und den Tragekomfort und damit die Akzeptanz für den Hund zu erhöhen.

Nach einem weiteren Vorschlag der Erfindung weist ein Obermaterial des Führungsabschnitts zumindest teilweise reflektierende Eigenschaften auf. Beispielsweise können die Außenränder des Führungsstegs mit reflektierendem Material bedeckt sein. Es ist auch denkbar, dass der gesamte Führungsabschnitt über eine reflektierende Oberfläche verfügt. Reflektierendes Material am Führungsabschnitt bietet eine erhöhte Sichtbarkeit des Hundes in Dämmerung und Dunkelheit, weil er beispielsweise von Autofahrern in deren Scheinwerferlicht deutlicher sichtbar wird und ein Zusammenstoß vermieden werden kann.

Nach einem weiteren Vorschlag der Erfindung besteht der Führungsabschnitt überwiegend aus textilem Material. Bevorzugt zeichnet er sich durch hohe Zugfestigkeit aus, um auch bei dauerhafter Nutzung Stabilität und Langlebigkeit des Führungsabschnitts zu garantieren. Zum einen ist dies ökonomisch vorteilhaft, zum anderen kann durch die Auswahl eines geeigneten Materials ein hoher Tragekomfort für den Hund gewährleistet werden. Der Verzicht auf Materialien tierischer Herkunft ist zudem aus Tierschutzaspekten vorteilhaft. Es ist zudem denkbar, den Führungsabschnitt oder Teile davon, beispielsweise die Beinschlaufen, aus elastischem Material herzustellen, um den Tragekomfort für den Hund zu erhöhen.

Nach einem weiteren Vorschlag der Erfindung ist ein Geschirr oder Halsband mit einer Befestigungsöse für eine Leine vorgesehen, an dem der Führungsabschnitt mit dem Befestigungselement am Geschirr oder Halsband benachbart zur Befestigungsöse befestigt ist. Auf diese Weise kann die Leine durch die Leinenführungen hindurch zur Befestigungsöse geführt und dort befestigt werden, sodass eine sichere Führung des Hundes durch Zusammenwirken des Geschirrs oder Halsbandes mit dem Führungsabschnitt jederzeit gewährleistet ist. Der erfindungsgemäße Führungsabschnitt ist nicht dazu vorgesehen und geeignet, ohne die Verwendung eines Halsbands oder Geschirrs eine Leine an einem Hund zu befestigen.

Die Erfindung wird nachfolgend anhand eines Ausführungsbeispiels in der Zeichnung weiter erläutert.

Es zeigt:

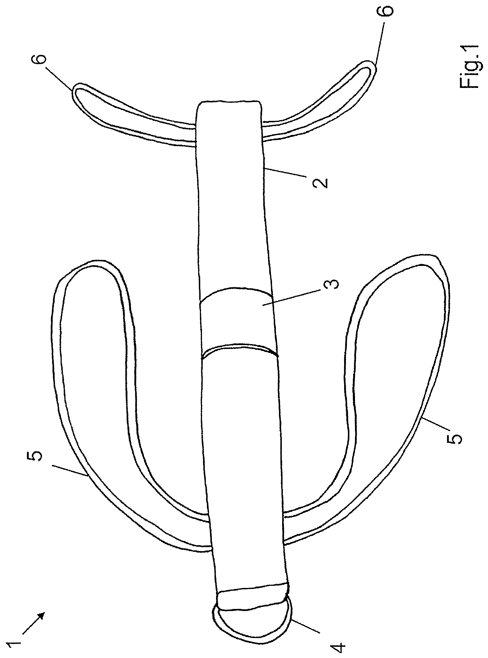

- Figur 1: Eine Draufsicht auf einen erfindungsgemäßen Führungsabschnitt.

In Figur 1 ist ein Führungsabschnitt 1 gezeigt. Er umfasst einen Führungssteg 2 zur Auflage auf dem Rücken des Hundes. An dem Führungssteg 2 sind auf der bei Auflage auf dem Rücken des Hundes dem Hundekopf zugewandten, vorderen Seite zwei Befestigungsschlaufen 6 angeordnet. Diese dienen der Fixierung des Führungsabschnitts 1 an einem Geschirr oder Halsband. Am rückwärtigen Ende des Führungsstegs 2, das bei Auflage auf dem Rücken des Hundes dem Hundekopf abgewandt ist, ist eine Leinenführung 4 angeordnet. Auch in der Mitte des Führungsstegs 2 findet sich eine Leinenführung 3. Sowohl die am rückwärtigen, als auch die in Richtung des vorderen Endes des Führungsstegs angeordnete Leinenführung 3,4 erstrecken sich in ihrer Breite über die gesamte Breite des Führungsstegs 2. An dem bei Auflage auf dem Rücken des Hundes dem Hundekopf abgewandten, rückwärtigen Ende des Führungsstegs 2 sind zudem zwei Beinschlaufen 5 angeordnet. Diese dienen der Befestigung des Führungsabschnitts 1 an den Hinterbeinen des Hundes. Jede Beinschlaufe 5 wird jeweils um einen Hinterlauf gelegt. Vorzugsweise sind die Beinschlaufen längenverstellbar, sodass sie an den Hundekörper anpassbar sind. Die Länge des Führungsstegs 2 ist bevorzugt an die Länge des Hunderückens angepasst und wird idealerweise so gewählt, dass sich der Führungssteg 2 ausgehend von der Befestigungsöse für die Leine des verwendeten Halsbands oder Geschirrs bis zum Schwanzansatz des Hundes erstreckt, sodass die Leinenführung 4 kurz vor dem Schwanzansatz des Hundes angeordnet ist. Eine am Geschirr oder Halsband befestigte Leine ist durch die Leinenführungen 3,4 führbar. Die Leine liegt dann auf einer Achse parallel zu einer Längsachse des Hunderückens auf, was ein Verheddern der Leine zwischen den Hundebeinen verhindert.

### Bezugszeichenliste

- 1: Führungsabschnitt
- 2: Führungssteg
- 3: Leinenführung
- 4: Leinenführung
- 5: Beinschlaufen
- 6: Befestigungselement

## Patentansprüche

1. Führungsabschnitt (1), umfassend einen streifenförmigen Führungssteg (2) mit einem vorderen und einem rückwärtigen Ende, wobei der Führungssteg (2) dazu eingerichtet ist, auf dem Rücken eines Hundes aufzuliegen, wobei das vordere Ende bei Auflage des Führungsabschnittes (1) auf dem Rücken eines Hundes dem Hundekopf zugewandt und das rückwärtige Ende dem Hundekopf abgewandt ist und der Führungssteg (2) am vorderen Ende mit mindestens einem Befestigungselement (6) versehen ist, welches dazu ausgelegt ist, lösbar an einem eine Befestigungsöse für eine Leine aufweisenden Geschirr oder Halsband fixiert zu werden,
wobei mindestens zwei Leinenführungen (3, 4) vorgesehen sind, von denen eine im Bereich des rückwärtigen Endes und die andere in Richtung des vorderen Endes beabstandet am Führungssteg (2) angeordnet ist und die derart ausgestaltet sind, dass bei Auflage des Führungsabschnittes (1) auf dem Rücken des Hundes eine am Geschirr oder Halsband befestigte Leine durch die Leinenführungen (3, 4) hindurch entlang einer Achse parallel zur Längsachse des Hunderückens führbar ist,
**dadurch gekennzeichnet, dass**
am rückwärtigen Ende Beinschlaufen (5) angeordnet sind, die zur Befestigung des Führungsabschnittes (1) an den Hinterbeinen des Hundes ausgelegt sind.

2. Führungsabschnitt (1) nach Anspruch 1, **dadurch gekennzeichnet, dass** der Abstand zwischen den Leinenführungen (3,4) zwischen 5 und 40 cm beträgt.

3. Führungsabschnitt (1) nach Anspruch 1 oder 2, **dadurch gekennzeichnet, dass** die Leinenführung (4) im Bereich des rückwärtigen Endes im Wesentlichen aus Metall oder Kunststoff gebildet ist.

4. Führungsabschnitt (1) nach einem der Ansprüche 1 bis 3, **dadurch gekennzeichnet, dass** die in Richtung des vorderen Endes beabstandete Leinenführung (3) in Form einer Stoffschlaufe ausgebildet ist.

5. Führungsabschnitt (1) nach einem der Ansprüche 1 bis 4, **dadurch gekennzeichnet, dass** die Beinschlaufen (5) und/oder Befestigungselemente (6) längenverstellbar sind.

6. Führungsabschnitt (1) nach einem der Ansprüche 1 bis 5, **dadurch gekennzeichnet, dass** die Beinschlaufen (5) und/oder Befestigungselemente (6) jeweils ein Verschlusselement zum Öffnen und Wiederverschließen aufweisen.

7. Führungsabschnitt (1) nach einem der Ansprüche 1 bis 6, **dadurch gekennzeichnet, dass** die Beinschlaufen (5) eine Polsterung aufweisen.

8. Führungsabschnitt (1) nach einem der Ansprüche 1 bis 7, **dadurch gekennzeichnet, dass** ein Obermaterial des Führungsabschnitts (1) zumindest teilweise reflektierende Eigenschaften aufweist.

9. Führungsabschnitt (1) nach einem der Ansprüche 1 bis 8, **dadurch gekennzeichnet, dass** der Führungsabschnitt (1) überwiegend aus textilem Material besteht.

10. Anordnung umfassend einen Geschirr oder Halsband mit einer Befestigungsöse für eine Leine und einen Führungsabschnitt (1) gemäß einem der vorangehenden Ansprüche, der mit dem Befestigungselement (2) am Geschirr oder Halsband benachbart zur Befestigungsöse befestigt ist.

## Claims

1. Guidance section (1) comprising a strip-shaped guide web (2) having a front end and a rear end, wherein the guide web (2) is designed to rest on the back of a dog, wherein the front end faces the dog's head and the rear end faces away from the dog's head when the guidance section (1) rests on the back of a dog, and the guide web (2) is provided at the front end with at least one fastening element (6) which is designed to be detachably fixed to a harness or collar having a fastening eyelet for a leash,
wherein at least two leash guides (3, 4) are provided, one of which is arranged on the guide web (2) in the region of the rear end and the other at a distance in the direction of the front end and which are designed in such a way that, when the guidance section (1) rests on the dog's back, a leash fastened to the harness or collar can be guided through the leash guides (3, 4) along an axis parallel to the longitudinal axis of the dog's back,
**characterised in that**
leg loops (5) are arranged at the rear end which are designed for fastening the guidance section (1) to the hind legs of the dog.

2. Guidance section (1) according to claim 1, **characterised in that** the distance between the leash guides (3, 4) is between 5 and 40 cm.

3. Guidance section (1) according to claim 1 or 2, **characterised in that** the leash guide (4) is substantially formed from metal or plastic in the region of the rear end.

4. Guidance section (1) according to any one of claims 1 to 3, **characterised in that** the leash guide (3), which is spaced apart in the direction of the front end, is in the form of a fabric loop.

5. Guidance section (1) according to any one of claims 1 to 4, **characterised in that** the leg loops (5) and/or fastening elements (6) are adjustable in length.

6. Guidance section (1) according to any one of claims 1 to 5, **characterised in that** the leg loops (5) and/or fastening elements (6) each have a closing element for opening and re-closing.

7. Guidance section (1) according to any one of claims 1 to 6, **characterised in that** the leg loops (5) have padding.

8. Guidance section (1) according to any one of claims 1 to 7, **characterised in that** an upper material of the guidance section (1) has at least partially reflective properties.

9. Guidance section (1) according to any one of claims 1 to 8, **characterised in that** the guidance section (1) consists predominantly of textile material.

10. Arrangement comprising a harness or collar with a fastening eyelet for a leash and a guidance section (1) according to any one of the preceding claims, which guidance section is fastened to the harness or collar adjacent to the fastening eyelet by means of the fastening element (2).

## Revendications

1. Section de guidage (1) comprenant une nervure de guidage (2) en forme de bande avec une extrémité avant et une extrémité arrière, dans laquelle la nervure de guidage (2) est conçue afin de reposer sur le dos d'un chien, dans laquelle l'extrémité avant est tournée lors de la pose de la section de guidage (1) sur le dos d'un chien vers la tête du chien et l'extrémité arrière est éloignée de la tête du chien et la nervure de guidage (2) est pourvue à l'extrémité avant d'au moins un élément de fixation (6) qui est formé afin d'être fixé de manière amovible à un harnais ou collier présentant un oeillet de fixation pour une laisse,
dans lequel au moins deux guidages de laisse (3, 4) sont prévus, dont un est agencé dans la zone de l'extrémité arrière et l'autre à distance en direction de l'extrémité avant au niveau de la nervure de guidage (2) et qui sont formés de telle manière que lors de la pose de I
a section de guidage (1) sur le dos du chien, une laisse fixée au harnais ou collier puisse être guidée à travers les guidages de laisse (3, 4) le long d'un axe parallèle à l'axe longitudinal du dos du chien,
**caractérisée en ce que**
des tours de cuisse (5) sont agencés à l'extrémité arrière, tours qui sont conçus pour la fixation de la section de guidage (1) aux pattes arrière du chien.

2. Section de guidage (1) selon la revendication 1, **caractérisée en ce que** la distance entre les guidages de laisse (3, 4) est comprise entre 5 et 40 cm.

3. Section de guidage (1) selon la revendication 1 ou 2, **caractérisée en ce que** le guidage de laisse (4) est formé dans la zone de l'extrémité arrière sensiblement en métal ou matière plastique.

4. Section de guidage (1) selon l'une quelconque des revendications 1 à 3, **caractérisée en ce que** le guidage de laisse (3) espacé en direction de l'extrémité avant est réalisé sous la forme d'une boucle en tissu.

5. Section de guidage (1) selon l'une quelconque des revendications 1 à 4, **caractérisée en ce que** les tours de cuisse (5) et/ou éléments de fixation (6) sont réglables en longueur.

6. Section de guidage (1) selon l'une quelconque des revendications 1 à 5, **caractérisée en ce que** les tours de cuisse (5) et/ou éléments de fixation (6) présentent respectivement un élément de fermeture pour l'ouverture et la refermeture.

7. Section de guidage (1) selon l'une quelconque des revendications 1 à 6, **caractérisée en ce que** les tours de cuisse (5) présentent un rembourrage.

8. Section de guidage (1) selon l'une quelconque des revendications 1 à 7, **caractérisée en ce qu'**un matériau supérieur de la section de guidage (1) présente des propriétés au moins partiellement réfléchissantes.

9. Section de guidage (1) selon l'une quelconque des revendications 1 à 8, **caractérisée en ce que** la section de guidage (1) se compose principalement de matériau textile.

10. Ensemble comprenant un harnais ou collier avec un oeillet de fixation pour une laisse et une section de guidage (1) selon l'une quelconque des revendications précédentes qui est fixée avec l'élément de fixation (2) au harnais ou collier de manière contiguë à l'œillet de fixation.
